# EUROPEAN PATENT APPLICATION

(11) **EP 4 756 364 A1**
(43) Date of publication of application: **10.06.2026**
(21) Application number: 24217830.9
(22) Date of filing: 05.12.2024
(51) Int. Cl.: G01B 11/06, G01N 21/958

(54) **METHOD FOR DETECTING OPTICAL DEFECTS WITH HIGH SPATIAL RESOLUTION AND AREA COVERAGE**

(71) Applicant: SCHOTT AG, 55122 Mainz (DE)
(72) Inventor: REUTZEL, Anna-Lena, 55122 Mainz (DE); KORB, Thomas, 55122 Mainz (DE); HIEBL, Kai Jonas, 55122 Mainz (DE)
(74) Representative: Schott Corporate IP

(57) **Abstract**

The present disclosure relates to a method for detecting optical defects with high spatial resolution. In particular, the method of the disclosure allows high resolution characterization of optical inhomogeneities in samples of interest.

## Description

The present disclosure relates to a method for detecting optical defects with high spatial resolution and area coverage. In particular, the method of the disclosure allows high resolution characterization of optical inhomogeneities in samples of interest.

### Background of the Disclosure

Optical homogeneity of products is relevant in various application fields. Importance thereof is even further growing currently due to increased relevance of optical technology. In an ideal world, it would be possible to completely avoid any optical inhomogeneities. However, due to various constraints this goal is practically unachievable. In particular, in methods of mass production it is often impossible or at least uneconomical to force the production processes to avoid optical inhomogeneities completely. Industries rather accept certain inhomogeneities to occur during production and aim at identifying defective samples or sample parts for enabling their sorting and disposal in a post-production process. Such processes require reliable identification of defects.

Depending on the field of application there are varying requirements posed on respective identification processes. In some fields, it is sufficient to discard only such samples that are defective at first sight by naked eye. In other fields, it is important to detect even minor defects with high spatial resolution. Some fields require identification of defects only in specific parts of the samples while others require coverage of large parts of the samples.

Various methods for detecting optical defects are known in the art. Generally, methods with high spatial resolution are based on determining the total wave front error in laser interferometry setups. However, a major drawback of such methods is in particular a low area coverage which is mainly based on low signal intensity in certain areas of the samples. Depending on sample geometry this relates primarily to the peripheral areas of the samples which are usually the most difficult to measure reliably. However, the present detection methods are also prone to produce non-evaluable data at spots and areas of various sizes distributed throughout the samples of interest. Attempts to significantly increase the signal intensity have been unsuccessful so far. Therefore, there is a need for improved detection methods, in particular with respect to reliable production of evaluable data covering large areas of the samples.

### Brief Summary of the Disclosure

In a first aspect, the present disclosure relates to a method for detecting optical inhomogeneities in a sample, the method comprising the following steps:
a) Providing a sample having an actual thickness profile,
b) Determining the apparent thickness profile of the sample with a chromatic confocal thickness measurement,
c) Detecting optical inhomogeneities based on deviations of the apparent thickness profile from the actual thickness profile.

In a second aspect, the present disclosure relates to the use of the method of the first aspect, in particular in quality control.

### Brief Description of the Drawings

Figure 1 schematically shows the principle of chromatic confocal distance and thickness measurements.
Figure 2 is a schematic drawing (not to scale) of the positioning of a center line profile (25) within the measured section of the glass tube (20).
Figure 3 shows the experimental data obtained at the 320° rotational position and indicates how the line profile (left side) is obtained based on the 3D representation (right side).
Figure 4 shows the experimental data obtained at the 320° rotational position (Figure 4A) and at the 240° rotational position (Figure 4B). The 3D representations are shown on the right side and the corresponding center line profiles on the left side.
Figure 5 shows a bar chart summarizing the maximum 2D slope angle obtained at different rotational positions in measurement series M1 to M6.
Figure 6 shows a bar chart summarizing the maximum amplitude of change of apparent thickness obtained at different rotational positions in measurement series M1 to M6.

### Detailed Description of the Disclosure

The present disclosure relates to a method for detecting optical inhomogeneities in a sample. The method comprises the following steps:
a) Providing a sample having an actual thickness profile,
b) Determining the apparent thickness profile of the sample with a chromatic confocal thickness measurement,
c) Detecting optical inhomogeneities based on deviations of the apparent thickness profile from the actual thickness profile.

In some embodiments, the method has a spatial resolution of at least 10 µm, in particular at least 5.0 µm, or even at least 2.5 µm. Thus, in some embodiments the distance between neighboring data points is at most 10 µm, in particular at most 5.0 µm or even at most 2.5 µm. In some embodiments, the distance between neighboring data points is at least 0.5 µm, at least 1.0 µm, or at least 1.5 µm. In some embodiments, the distance between neighboring data points is in a range of from 0.5 to 10 µm, for example from 1.0 to 5.0 µm or from 1.5 to 2.5 µm.

In some embodiments, the method has an area coverage of at least 50% of the entire sample area, in particular at least 65% or even at least 75%. In some embodiments, the area coverage is at most 99%, at most 95% or at most 90% of the entire sample area. In some embodiments, the area coverage is in a range of from 50% to 99%, for example from 65% to 95% or from 75% to 90% of the entire sample area.

In some embodiments, the signal-to-noise ratio is at least 3:1, for example at least 4:1 or at least 5:1. In some embodiments, the signal-to-noise ratio is at most 100:1, for example at most 25:1 or at most 10:1. In some embodiments, the signal-to-noise ratio is in a range of from 3:1 to 100:1, for example from 4:1 to 25:1 or from 5:1 to 10:1.

In some embodiments, the method provides an apparent thickness profile for at least 50%, at least 65% or at least 75% of the sample area with a signal-to-noise ratio of at least 3:1.

### Providing a sample having an actual thickness profile

According to step a), a sample having an actual thickness profile is provided.

In some embodiments, the sample has a transmittance of at least 50%, for example at least 60% or at least 70% at any of the measurement wavelengths. Such a transmittance ensures particularly high signal intensities. Transmittance of the sample may for example be measured with a spectrophotometer.

In some embodiments, the measurement wavelengths consist of the wavelengths of the visible spectrum, in particular the wavelengths in a range of from 380 to 750 nm. Thus, in some embodiments, the sample has a transmittance of at least 50% at any wavelength within the range of from 380 to 750 nm. Such samples may also be referred to as transparent samples. Alternatively or additionally, the samples may have a transmittance of at least 50% at one or more wavelengths outside of the visible spectrum, for example in the near infrared range, in particular within a range of from >750 nm to 1400 nm. Notably, the measurement wavelengths do not necessarily include one or more wavelengths from the visible range. In some embodiments, the measurement wavelengths only include wavelengths from the near infrared range. For example, the measurement wavelengths may include or consist of the wavelengths within the range of from 780 to 1150 nm.

In some embodiments, the sample comprises or consists of glass or glass ceramic. In some embodiments, the sample comprises glass or glass ceramic. In some embodiments, the sample consists of glass or glass ceramic. In some embodiments, the sample comprises glass. In some embodiments, the sample consists of glass. In some embodiments, the sample comprises glass ceramic. In some embodiments, the sample consists of glass ceramic. The method of the present disclosure may also be performed on material other than glass or glass ceramic, for example on acrylic glass.

The sample provided in step a) has an actual thickness profile. The actual thickness profile of the sample is known. It is important to know the thickness profile of the sample because the detection of optical inhomogeneities described herein depends on the deviations of the apparent thickness profile from the actual thickness profile. The apparent thickness profile is determined with a chromatic confocal thickness measurement. If the actual thickness profile of the sample was not known, it would be impossible to determine any deviations of the apparent thickness profile from the actual thickness profile.

That the actual thickness profile of the sample is known, can be achieved by various measures. For example, the actual thickness profile can be measured, in particular by non-optical means, for example with a caliper, with an indicator (distance amplifying instrument) or with a thickness sensor such as a thickness gauge or a thickness micrometer. In some embodiments, the method of the present disclosure comprises the step of measuring the actual thickness profile of the sample by non-optical means. In some embodiments, the actual thickness profile of the sample is predetermined. In such embodiments, measuring the actual thickness profile may be unnecessary because the actual thickness profile is known based on the predetermination thereof. In some embodiments, step a) of providing a sample having an actual thickness profile comprises a polishing step. Polishing is a particularly suitable measure for predetermining the actual thickness profile of the sample.

In some embodiments, the total thickness variation (TTV) of the sample is at most 10 µm, for example at most 7.5 µm, at most 5.0 µm, or at most 2.5 µm. Preferably, the total thickness variation (TTV) of the sample is as small as possible and ideally 0. This enables a particularly easy data analysis and evaluation of deviations of the apparent thickness profile from the actual thickness profile. If the actual thickness profile is more complicated, the difference between the apparent thickness and the actual thickness must be evaluated for every measuring position individually by assigning for every measuring position the actual thickness corresponding to the apparent thickness (or *vice versa*)*.* In contrast, if the actual thickness is constant throughout the sample (within the limits given by the TTV of at most 10 µm), the difference between apparent thickness and actual thickness can be determined with acceptable accuracy without assignment of corresponding values, namely by simply subtracting the same representative actual thickness value from each apparent thickness value. As the TTV is low, any actual thickness value is "representative" in this respect, including the minimum value, the maximum value and any value in between. In fact, in case of low TTV it is not necessary at all to compute the difference between apparent thickness and actual thickness because the detection of optical inhomogeneities does not rely on such absolute differences as such but rather on changes in apparent thickness along 2D line profiles. Such changes are relative and can be determined based on the apparent thickness profile as such without normalization to the actual thickness profile provided that the actual thickness is constant throughout the sample (within the limits given by the TTV of at most 10 µm). Therefore, deviations of the apparent thickness profile from the actual thickness profile can be determined based on the apparent thickness profile as such, i.e. in particular without normalization to the actual thickness profile. The TTV may for example be measured with a caliper, with an indicator (distance amplifying instrument) or with a thickness sensor such as a thickness gauge or a thickness micrometer, in particular by a contact thickness measurement on a coordinate device.

To verify that there is no wedge shape, the topography of both sides of the sample can be measured. In some embodiments, the warp is at most 10 µm, for example at most 7.5 µm, at most 5.0 µm, or at most 2.5 µm. The method of the disclosure is not limited to samples having a warp of at most 10 µm. In particular, the method can be performed with curved samples as well. In some embodiments, the curvature may be limited by a tolerance angle of the sensor, for example of at most 45°, at most 37.5° or at most 30°.

The method of the present disclosure is not limited to certain sample shapes. The samples may for example be rectangular, triangular, round-shaped, or ring-shaped. Ring-shaped samples may for example be obtained as cross-sections of glass tubes. While an entire glass-tube may be difficult to measure in a chromatic confocal thickness measurement, ring-shaped sections thereof can be measured well.

In some embodiments, the sample thickness is in a range of from 4 µm to 25 mm, in particular from 30 µm to 3.0 mm, for example 3.0 mm. In some embodiments, the sample thickness is at least 4 µm, for example at least 30 µm, at least 100 µm, at least 500 µm, or at least 700 µm. In some embodiments, the sample thickness is at most 25 mm, for example at most 15 mm, at most 10 mm, at most 7.5 mm, at most 5.0 mm, or at most 3.0 mm.

### Chromatic confocal thickness measurement

The method of the present disclosure comprises the step of determining the apparent thickness profile of the sample with a chromatic confocal thickness measurement.

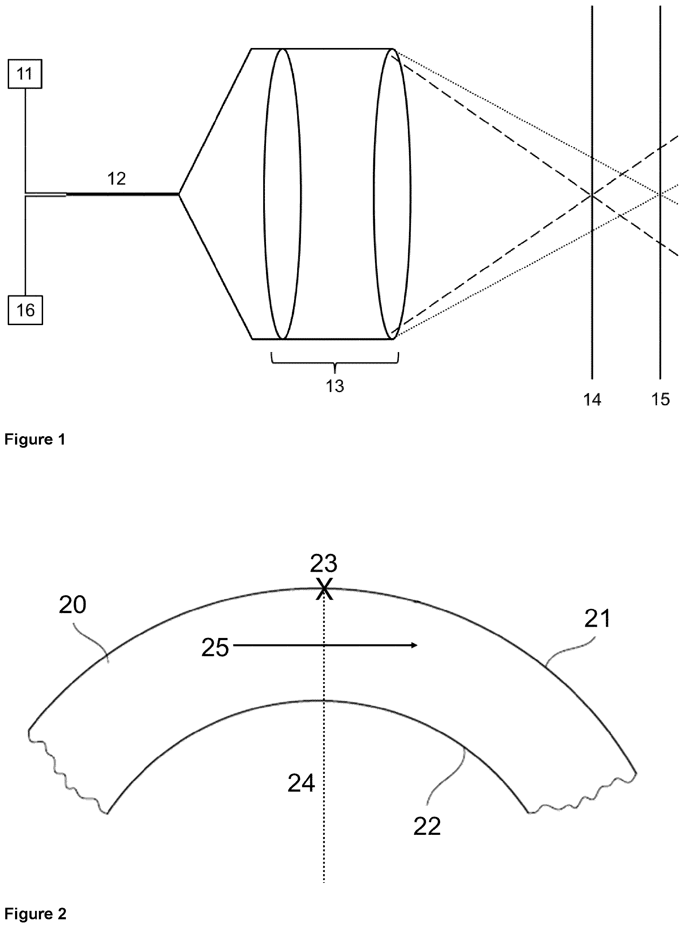

In chromatic confocal thickness measurements, a light source (in particular a white light source) is used to guide the light to the measuring head with an optical fiber. The measuring head contains a lens system with a pronounced longitudinal defect, thus creating a chromatic aberration. The light, with its wavelength-dependent foci, then hits the test specimen. A wavelength is precisely focused and produces a sharp image. The reflected light is transported via the fiber to a calibrated spectrometer. A spectrometer is a device for the wavelength-dependent determination of intensities. A sharp peak with maximum intensity is generated at the discrete wavelength currently in focus. Calibration allows each discrete wavelength to be assigned a discrete distance value (Figure 1).

The thickness measurement corresponds to two distance measurements, since there are two interfaces in the measuring range. The prerequisite for this is that the sample is transparent to the light used. The front side of the sample is the first interface, and the back side of the sample is the second interface. At each of the two interfaces, a reflection is generated and thus an intensity peak in the spectrum. If the optical properties of the sample, refractive index and Abbe number, are known and homogeneous over the measured area, the thickness (z-value) can be calculated from the difference between the two distance measurements.

The method of the present disclosure relies on an alternative application of the chromatic confocal thickness measurement. Instead of using chromatic confocal thickness measurement to measure the actual thickness profile of a sample, the method of the present disclosure uses chromatic confocal thickness measurement to determine the apparent thickness profile of the sample. As the actual thickness profile of the sample is known, any deviations from the actual thickness profile of the sample in the apparent thickness profile determined by chromatic confocal thickness measurement is based on optical inhomogeneities of the sample. Therefore, optical inhomogeneities can be determined based on deviations of the apparent thickness profile from the actual thickness profile.

For determining the apparent thickness profile of the sample, the method of the disclosure in particular assumes that the optical properties of the sample, in particular refractive index and Abbe number, are homogeneous over the measured area of the sample. Any deviations of the apparent thickness profile from the actual thickness profile of the sample can be attributed to changes of the optical properties of the sample, i.e. to optical inhomogeneities.

The chromatic confocal thickness measurement provides an apparent thickness value for various measuring positions. A measuring position is defined by a given position on the sample in x- and y-direction, i.e. the two directions that are perpendicular to the thickness direction (z-direction). In theory, an unlimited number of measuring positions can be defined for a given sample. However, practically the number of measuring positions is limited by various constraints, for example by the spatial resolution with which the measurement equipment can be guided to different spatial positions. Moreover, an unlimited spatial resolution is also not reasonable in practice because the optical inhomogeneities that are generally observed are not occurring with such sharp transitions either. Therefore, chromatic confocal thickness measurement generally provides data for a high but not unlimited number of measuring positions.

An apparent thickness value (z-value) is obtained for the various measuring positions (sample positions in x- and y-direction). Thus, the data obtained by chromatic confocal thickness measurements are 3-dimensional in this respect (x, y, z). In order to obtain a full data set, the measurement equipment is guided to the measuring positions of interest (x, y) and there the apparent sample thickness is measured (z-value). In some embodiments, step b) of determining the apparent thickness profile of the sample with a chromatic confocal thickness measurement comprises a stepwise scanning of the sample. In some embodiments, the step size is in a range of from 0.5 µm to 1000 µm, for example from 1.0 to 100 µm, from 1.5 to 10 µm, or from 2.0 to 5.0 µm in x- and/or y-direction. In some embodiments, the step size is in a range of from 0.5 µm to 1000 µm, for example from 1.0 to 100 µm, from 1.5 to 10 µm, or from 2.0 to 5.0 µm in x-direction. In some embodiments, the step size is in a range of from 0.5 µm to 1000 µm, for example from 1.0 to 100 µm, from 1.5 to 10 µm, or from 2.0 to 5.0 µm in y-direction. In some embodiments, the step size is in a range of from 0.5 µm to 1000 µm, for example from 1.0 to 100 µm, from 1.5 to 10 µm, or from 2.0 to 5.0 µm in x- and y-direction.

In some embodiments, the scanning step is done in a meandering way. This allows particularly efficient data acquisition.

### Detecting optical inhomogeneities

The method of the present disclosure is a method for detecting optical inhomogeneities in a sample. Such inhomogeneities may also be referred to as optical defects. In some embodiments, the optical inhomogeneities are streaks. Usually, optical inhomogeneities result from the production process and are based on inhomogeneous material distribution causing local changes of the optical properties of the sample, in particular refractive index and Abbe number. When the optical properties are assumed to be constant, chromatic confocal thickness measurements show changes in the apparent sample thickness at the positions of changed optical properties. Therefore, these measurements can be used for detecting optical inhomogeneities.

However, one problem remains, namely, how to decide on whether an apparent thickness change detected in the chromatic confocal thickness measurement in fact corresponds to an optical inhomogeneity or whether it is merely a minor fluctuation that can be accepted. While the decision as such depends on the circumstances of the individual products to be examined, and in particular on their field of application, the present disclosure provides general strategies that can be applied independently of the individual circumstances.

In some embodiments, the method of the disclosure comprises the step of visualizing the deviations of the apparent thickness profile from the actual thickness profile, in particular by a false-color representation. Optical inhomogeneities can be detected based on such a visualization.

In some embodiments, in particular in terms of automatization of the process, the method of the disclosure comprises generating one or more 2D line profiles, in particular by plotting the apparent sample thickness (or the difference of apparent sample thickness and actual sample thickness) along a trajectory of measuring positions. In some embodiments, the trajectory is a straight line. In some embodiments, the trajectory is parallel to the x-direction. In some embodiments, the trajectory is parallel to the y-direction.

The length of the trajectory may vary depending on the type of sample, in particular depending on the dimensions thereof. In some embodiments, the length of the trajectory may be in a range of from 30 µm to 300 mm or from 100 µm to 100 mm, for example at least 1000 µm, about 4500 µm, at most 10.0 mm or at most 50.0 mm.

In some embodiments, the line profiles are straight lines, for example as exemplarily shown in Figure 2. This is particularly the case in embodiments in which the samples are large enough such that straight line profiles having a desired length (for example 4500 µm) can be positioned within the measured sample area. However, the present disclosure is not restricted to such samples. Rather, smaller samples are also part of the disclosure. In some embodiments, the line profiles are curved, in particular adapted to the curvature of curved sample such as sections of glass tubes, for example such that the line profiles are parallel to the outer surface and/or to the inner surface of the glass tubes.

2D line profiles enable automatic evaluation and detection of optical inhomogeneities based on objective criteria. In some embodiments, the optical inhomogeneities are detected based on the one or more 2D line profiles, in particular based on the amplitude and/or steepness of changes in apparent thickness (or on the amplitude and/or steepness of changes in the difference of apparent sample thickness and actual sample thickness) along the 2D line profiles. In some embodiments, the optical inhomogeneities are detected based on the one or more 2D line profiles, in particular based on the amplitude of changes in apparent thickness (or on the amplitude of changes in the difference of apparent sample thickness and actual sample thickness) along the 2D line profiles. In some embodiments, the optical inhomogeneities are detected based on the one or more 2D line profiles, in particular based on the steepness of changes in apparent thickness (or on the steepness of changes in the difference of apparent sample thickness and actual sample thickness) along the 2D line profiles. In some embodiments, the optical inhomogeneities are detected based on the one or more 2D line profiles, in particular based on the amplitude and steepness of changes in apparent thickness (or on the amplitude and steepness of changes in the difference of apparent sample thickness and actual sample thickness) along the 2D line profiles.

In some embodiments, the amplitude of a change in apparent thickness is determined as the difference between the highest apparent thickness and the lowest apparent thickness within a distance of interest along the 2D line profile. This is in particular the case in embodiments with low TTV samples because such embodiments are particularly well suited for determining deviations of the apparent thickness profile from the actual thickness profile based on the apparent thickness profile as such without normalization to the actual thickness profile. In other embodiments, the amplitude of a change in the difference of apparent sample thickness and actual sample thickness is determined as the difference between the highest and lowest difference of apparent thickness and actual thickness within a distance of interest along the 2D line profile.

The distance of interest may vary depending on the type of samples and the inhomogeneities expected to be found therein. Generally, the distance of interest may for example be in a range of from 50 µm to 5000 µm, for example at least 100 µm, about 360 µm, or at most 1000 µm.

An optical inhomogeneity may be detected based on the amplitude reaching or exceeding a threshold value. The threshold value may vary depending on the type of samples and the inhomogeneities expected to be found therein. Generally, the amplitude threshold value may for example be in a range of from 10 to 100 µm, for example at least 15 µm, about 25 µm, or at most 50 µm.

According to a preferred embodiment the total thickness variation (TTV) is smaller than the amplitude threshold value. For example, the ratio of the total thickness variation to the amplitude threshold value is from 1:10 to 1:10000.

Alternatively or additionally to the amplitude, the steepness of changes of apparent thickness (or the steepness of changes in the difference of apparent sample thickness and actual sample thickness) may be used as a readout for detecting optical inhomogeneities. In some embodiments, the steepness of a change in apparent thickness is determined as the ratio of the difference between the highest apparent thickness and the lowest apparent thickness within a distance of interest along the 2D line profile and the respective distance of interest. This is in particular the case in embodiments with low TTV samples because such embodiments are particularly well suited for determining deviations of the apparent thickness profile from the actual thickness profile based on the apparent thickness profile as such without normalization to the actual thickness profile. In other embodiments, the steepness of a change in the difference of apparent sample thickness and actual sample thickness is determined as the ratio of the difference between the highest lowest difference within a distance of interest along the 2D line profile and the respective distance of interest.

The distance of interest may vary depending on the type of samples and the inhomogeneities expected to be found therein. Generally, the distance of interest may for example be in a range of from 50 µm to 5000 µm, for example at least 100 µm, about 360 µm, or at most 1000 µm.

An optical inhomogeneity may be detected based on the steepness reaching or exceeding a threshold value. The threshold value may vary depending on the type of samples and the inhomogeneities expected to be found therein. Generally, the steepness threshold value may for example be in a range of from 0.01 to 0.50, for example at least 0.05, about 0.10, or at most 0.25.

The steepness may also be represented as a 2D slope angle α, wherein tan(α) is equal to the steepness. For example, a steepness of 0.07 approximately corresponds to a 2D slope angle of 4° because tan(4°) is about 0.07. It is also possible to express the 2D slope angle in the unit of "arcsec", wherein 3600 arcsec = 1°. In some embodiments, the threshold value of the 2D slope angle is in a range of from 2,000 to 100,000 arcsec, for example at least 10,000 arcsec, about 20,000 arcsec, or at most 50,000 arcsec.

In some embodiments, an optical inhomogeneity is detected if the amplitude of a change in apparent thickness is at least 25 µm and/or the steepness of the change in apparent thickness is at least 0.10 based on a distance of interest of 360 µm along a 2D line profile, in particular a 2D line profile having a length of 4500 µm.

In some embodiments, a sample may be characterized as being free of optical inhomogeneities if the amplitude and/or the steepness of changes of apparent thickness (or the amplitude and/or steepness of changes in the difference of apparent sample thickness and actual sample thickness) is below the respective threshold values for any 2D line profile and any distance of interest. In some embodiments, the maximum amplitude and/or the maximum steepness are below the respective threshold values.

In some embodiments, the trajectory of measuring positions (on which the 2D line profiles are based) is positioned manually and/or defined manually regarding its length. In particular, visual inspection of the 3D data (x, y, z), for example based on a false-color representation, may be used to identify (potential) inhomogeneities and the trajectories of measuring positions may be positioned and/or defined regarding their length accordingly to enable quantitative assessment of the inhomogeneity, in particular in terms of amplitude and/or steepness of change of apparent thickness. The same holds true for distance of interest within the 2D line profile. This distance may be defined manually in terms of length and/or may be positioned manually within the 2D line profile to enable quantitative assessment of the inhomogeneity.

However, such manual approaches are comparably time consuming and may be associated with biases or may be in other ways error prone. Therefore, some embodiments of the disclosure apply more systematic approaches.

In some embodiments, the trajectories of measuring positions are positioned and/or defined regarding their length according to predefined settings, in particular manually or automatically (in particular software-supported). In particular upon automatic positioning and/or length definition of the trajectories, a large number of 2D line profiles can be generated basically without effort based on the predefined settings. In some embodiments, the number of 2D line profiles is in a range of from 1 to 10,000, for example from 2 to 1,000, from 5 to 500 or from 10 to 100. In some embodiments, the number of 2D line profiles is at least 1, at least 2, at least 5, or at least 10. The higher the number of 2D line profiles is, the more accurate is the characterization of the sample.

In some embodiments, the distances of interest within the 2D line profiles are positioned and/or defined regarding their length according to predefined settings, in particular manually or automatically (in particular software-supported). In particular upon automatic positioning and/or length definition of the distances of interest, a large number of distances of interest can be generated basically without effort based on the predefined settings for any given 2D line profile. The higher the number of distances of interest per 2D line profile is, the more accurate is the characterization of the sample. In some embodiments, the number of distances of interest per 2D line profile is in a range of from 1 to 100,000 or from 5 to 10,000, for example at least 10, about 24, or at most 1000. In some embodiments, individual distances of interest within a given 2D line profile are shifted with respect to each other by a (pre-)defined offset. In some embodiments, the number of distances of interest and the offset are chosen such that the distances of interest cover the entire 2D line profile.

In some embodiments, the derivative of the 2D line profile is created to determine the maximum steepness. The distance of interest can be positioned accordingly to cover the maximum steepness.

### Special sample shapes

The method of the present disclosure is particularly suitable for examining tube segments.

Glass tubes are rather specific in terms of their geometry so that special measures are required for the measurement. The measurement is done on tube segments having a thickness of 3 mm. Optical inhomogeneities are visible as apparent thickness variations in the measurement. For the measurement, the sample (tube segment) is clamped in a three-jaw holder, the front face of the sample facing the sensor. The sample is measured by scanning it in a meandering pattern (meander scan with (10x10) µm step size and (4500x2900) µm travel distance) resulting in measuring positions defined by their position (x, y) on the tube segment and by the apparent thickness (z-value) corresponding to that position.

Due to the sample geometry and the geometry of the instrument, such a measurement generally provides measuring positions only for a minor part of the sample, namely for a ring section covering merely a part of the entire 360° sample depending on the geometry. Therefore, the sample is repeatedly rotated, for example in steps of 10° (clockwise or counterclockwise), and measured again and again to eventually cover the entire 360° sample after 35 rotations. Such a rotation scheme results in varying rotational positions of the sample. The initial rotational position of the sample may be referred to as the "12 o'clock position" or the "0° position". After the first rotation, the rotational position of the sample may be referred to as the "10° position". After the second rotation, the rotational position of the sample may be referred to as the "20° position" and so on until the "350° position" is reached after the 35^{th} rotation. In such a manner, the wavefront deformation is measured for the entire sample based on 36 rotational positions thereof. Thus, based on measurements on the 36 rotational positions of the sample, the entire 360° sample is covered so that a z-value (apparent sample thickness) is provided for x-y-positions throughout the entire sample.

The step size of the rotation of the sample is chosen according to the size of the ring section covered by one measurement. In particular, the step size of the rotation is chosen to be smaller than the ring section covered by one measurement. For example, if one measurement covers 15° of the entire 360° sample, the step size of rotation may be chosen to be 10°. This ensures that no part of the sample remains unmeasured. The fact that parts of the sample are measured twice in neighboring rotational positions is irrelevant to the outcome of the experiment because in the end the measurement aims at determining whether there are optical inhomogeneities such as streaks or not. If an inhomogeneity is detected twice in neighboring rotational positions, this is not a problem. Rather, it may be important that no inhomogeneity is missed in the measurement.

Other sample shapes may require special measures as well for covering all of the sample (or at least major parts thereof) with the chromatic confocal thickness measurement. For example, the sample geometry may be so large that several measurements are required. In such cases, the sample may simply be re-positioned after each measurement such that all parts of interest of the sample are covered successively by individual measurements.

### Apparatus and use

In some embodiments, the present disclosure relates to an apparatus adapted for carrying out the method of the disclosure. In some embodiments, the apparatus comprises a coordinate measuring machine (for example CT300 by cyberTECHNOLOGIES) and/or a chromatic confocal distance sensor (for example a sensor by Precitec referred to as S3000 by cyberTECHNOLOGIES). In some embodiments, the apparatus comprises a sample holder, for example a three-jaw holder, in particular the "Spindler & Hoyer" sample holder.

In some embodiments, the present disclosure relates to the use of the method of the disclosure and/or the apparatus of the disclosure, in particular in quality control.

### Exemplary Embodiments

In some embodiments, the disclosure relates to a method for detecting optical inhomogeneities in a sample, the method comprising the following steps:
a) Providing a sample having an actual thickness profile,
b) Determining the apparent thickness profile of the sample with a chromatic confocal thickness measurement,
c) Detecting optical inhomogeneities based on deviations of the apparent thickness profile from the actual thickness profile,
wherein the sample comprises or consists of glass or glass ceramic and wherein the total thickness variation (TTV) of the sample is at most 10 µm.

In some embodiments, the disclosure relates to a method for detecting optical inhomogeneities in a sample, the method comprising the following steps:
a) Providing a sample having an actual thickness profile,
b) Determining the apparent thickness profile of the sample with a chromatic confocal thickness measurement,
c) Detecting optical inhomogeneities based on deviations of the apparent thickness profile from the actual thickness profile,
wherein the sample has a transmittance of at least 50% at any wavelength within a range of from 380 to 750 nm, wherein the sample comprises or consists of glass or glass ceramic and wherein the total thickness variation (TTV) of the sample is at most 10 µm.

In some embodiments, the disclosure relates to a method for detecting optical inhomogeneities in a sample, the method comprising the following steps:
a) Providing a sample having an actual thickness profile,
b) Determining the apparent thickness profile of the sample with a chromatic confocal thickness measurement,
c) Detecting optical inhomogeneities based on deviations of the apparent thickness profile from the actual thickness profile,
wherein the deviations of the apparent thickness profile from the actual thickness profile are determined based on the apparent thickness profile as such and wherein the optical inhomogeneities are detected based on the amplitude and/or steepness of changes in apparent thickness along 2D line profiles.

In some embodiments, the disclosure relates to a method for detecting optical inhomogeneities in a sample, the method comprising the following steps:
a) Providing a sample having an actual thickness profile,
b) Determining the apparent thickness profile of the sample with a chromatic confocal thickness measurement,
c) Detecting optical inhomogeneities based on deviations of the apparent thickness profile from the actual thickness profile,
wherein the sample comprises or consists of glass or glass ceramic, wherein the TTV of the sample is at most 10 µm, wherein the deviations of the apparent thickness profile from the actual thickness profile are determined based on the apparent thickness profile as such and wherein the optical inhomogeneities are detected based on the amplitude and/or steepness of changes in apparent thickness along 2D line profiles.

In some embodiments, the disclosure relates to a method for detecting optical inhomogeneities in a sample, the method comprising the following steps:
a) Providing a sample having an actual thickness profile,
b) Determining the apparent thickness profile of the sample with a chromatic confocal thickness measurement,
c) Detecting optical inhomogeneities based on deviations of the apparent thickness profile from the actual thickness profile,
wherein the sample has a transmittance of at least 50% at any wavelength within a range of from 380 to 750 nm, wherein the sample comprises or consists of glass or glass ceramic, wherein the TTV of the sample is at most 10 µm, wherein the deviations of the apparent thickness profile from the actual thickness profile are determined based on the apparent thickness profile as such and wherein the optical inhomogeneities are detected based on the amplitude and/or steepness of changes in apparent thickness along 2D line profiles.

### Detailed Description of the Drawings

Figure 1 schematically shows the principle of chromatic confocal distance and thickness measurements. Light of a white light source (11) is guided to a measuring head with an optical fiber (12). The measuring head contains a lens system (13) with a pronounced longitudinal defect, thus creating a chromatic aberration. The light, with its wavelength-dependent foci, then hits the test specimen having a proximal surface (14) and a distal surface (15). A wavelength is precisely focused and produces a sharp image. The reflected light is transported via the fiber to a calibrated spectrometer (16). A sharp peak with maximum intensity is generated at the discrete wavelength currently in focus. Calibration allows each discrete wavelength to be assigned a discrete distance value. The thickness measurement corresponds to two distance measurements, since there are two interfaces (14) and (15) in the measuring range. Proximal surface (14) is in focus at a lower wavelength (dashed line) and distal surface (15) is in focus at a higher wavelength (dotted line).

Figure 2 is a schematic drawing (not to scale) of the positioning of a center line profile (25) within the measured section of the glass tube (20). The center line profile (25) is positioned into the measured section of glass tube (20) below vertex (23) of the tube section, perpendicular to the radius (24). The radius (24) is the direct and straight connection of vertex (23) and the center of the tube segment. The center line profile (25) is positioned symmetrically regarding both its x-positions and its y-position. Regarding its x-positions, the center line profile (25) is positioned such that half of the center line profile (25) is "left" of the radius (24) and half is "right" of the radius (24). Regarding its y-position, the center line profile is positioned such that the distance of the center of the line profile (25) from the outer surface (21) of the glass tube (20) is equal to its distance from the inner surface (22) of the glass tube (20) measured along the radius (24).

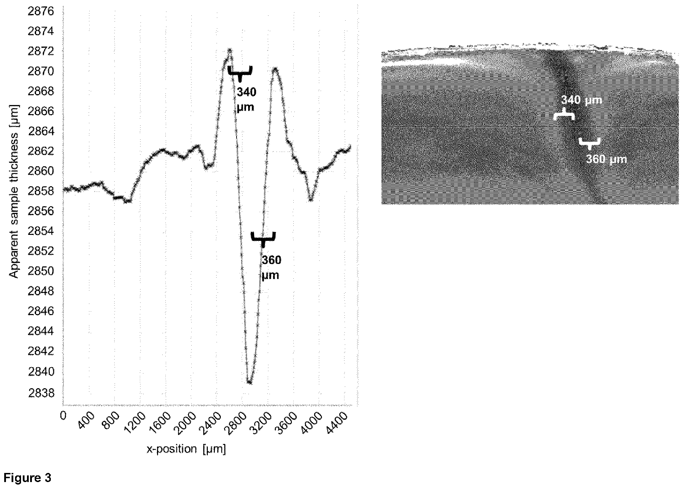

Figure 3 shows the experimental data obtained at the 320° rotational position and indicates how the line profile (left side) is obtained based on the 3D representation (right side). A center line profile was placed in the center of the measuring range. Two measuring cursors (340 µm and 360 µm) representing the distances of interest were positioned within this profile. The cursors were positioned at the streak position.

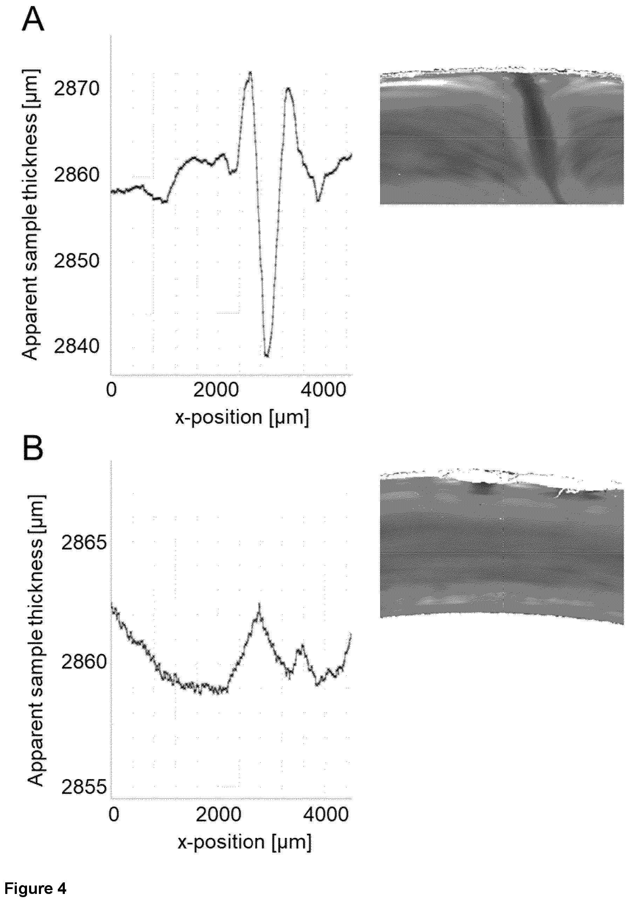

Figure 4 shows the experimental data obtained at the 320° rotational position (Figure 4A) and at the 240° rotational position (Figure 4B). The 3D representations are shown on the right side and the corresponding line profiles on the left side. Figure 4A shows a streak extending from the outer surface to the inner surface of the glass tube. The line profile shows a large amplitude of change of apparent thickness associated with a steep 2D slop angle. In contrast, as shown in Figure 4B, there is no streak at the 240° rotational position. Notably, the line profiles in Figures 4A and 4B are not shown in the same scale regarding apparent sample thickness. While the line profile of Figure 4A covers an apparent sample thickness from less than 2840 µm to more than 2870 µm, the line profile of Figure 4B is centered at an apparent sample thickness around 2860 µm.

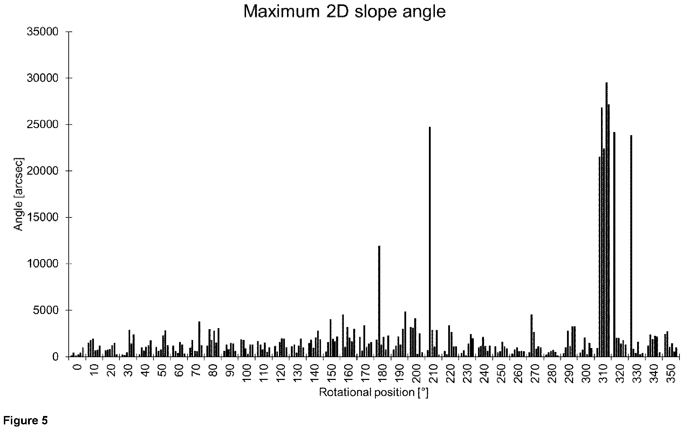

Figure 5 shows a bar chart summarizing the maximum 2D slope angle obtained at different rotational positions in measurement series M1 to M6. At each rotational position, one bar is shown for each measurement series. The determination of the maximum value of the 2D slope angle was reproducible in six measurement series (M1-M6). Except for outliers in series 2 (M2) for determining the magnitude of the 2D slope angle, all series of measurements showed only larger values at the position of the streak, between 310° and 330°.

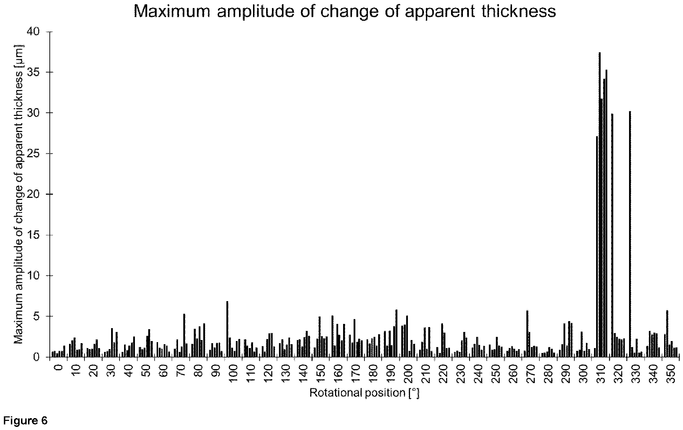

Figure 6 shows a bar chart summarizing the maximum amplitude of change of apparent thickness obtained at different rotational positions in measurement series M1 to M6. At each rotational position, one bar is shown for each measurement series. The determination of the maximum value of the amplitude was reproducible in six measurement series (M1-M6). All series of measurements showed only larger values at the position of the streak, between 310° and 330°.

### Examples

A segment of a glass tube having a thickness of 3 mm was tested for streaks using chromatic confocal thickness measurements.

### Sample preparation

The glass tube had an inner diameter of 31 mm and an outer diameter of 37 mm. Thus, the wall thickness was 3 mm.

The tube segment to be measured by chromatic confocal thickness measurement was cut from the glass tube with a diamond saw. The tube segment was bonded to a glass carrier at 100°C using C-putty. Subsequently, the tube segment was coarsely ground (SiC-free grain 250). The tube segment was then further ground on a pellet disk (45 µm). Subsequently, the sample was re-bonded to the second side and the grinding steps were repeated. Therein the sample was ground to a final thickness of 3 mm and polished. The sample was de-bonded and cleaned with ethanol in an ultrasonic bath.

### Chromatic confocal thickness measurement

### Equipment used:

- Coordinate measuring machine CT300 (cyberTECHNOLOGIES)
- Chromatic confocal distance sensor S3000 (3 mm measuring range, 12 µm spot diameter; 0.100 µm resolution)
- Test device PE 1-019
- SCAN SUITE, ScanCT software, version 8.10.7283

### Measurement and evaluation parameters used:

- Meander scan with (10x10) µm step size and (4500x2900) µm distance
- Assumed optical parameters (BF33): n=1.4714 and Abbe=65.69
- Cut-off filter (top: 2900 µm, bottom: 2820 µm) for outlier elimination
- Median 3:3 for data smoothing

The sample was clamped in a polymer ring in the "Spindler & Hoyer" sample holder (three-jaw holder). The polymer ring is designed to prevent distortion of the tube section. The notch marked as the start position was aligned at "12 o'clock" or 0°. The front face was facing the sensor. The specimen was measured by scanning it in a meandering pattern. The specimen was then step by step rotated 10° counterclockwise and repeatedly measured again until all positions from "0° position" to "350° position" were measured.

### Data analysis

A line profile was placed in the center of the measuring range, as shown in Figure 2. Two measuring cursors (340 µm and 360 µm) were positioned within this profile to measure a distance of interest. The cursors were positioned at the streak position (see Figure 3). Since the absolute thickness of 3 mm, which was predetermined by the polish, could not be normalized by software means, the z-axes (grey scale, not shown) of the 3D representations show values in the range of approximately 2800 µm. The same holds true for the y-axis in the line profiles because the z-values of the 3D representations are displayed as y-values in the 2D line profiles.

The 2D slope angles measured within the line profiles were documented. The maximum 2D slope angle of the two measuring cursors was used for the evaluation. The angle is given in the unit arcsec.

As a further measurement parameter, the amplitude of change of apparent thickness was evaluated in the same way. The evaluated amplitude was the peak-to-valley value.

Due to the manual positioning of the measuring cursors, the determined absolute values of the 2D slope angles are not necessarily exactly the absolute maximum 2D slope angles of the entire evaluation range. The same applies to the amplitude of change. However, as exemplarily shown in Figure 3, the manual positioning was good enough to expect only neglectable errors in this respect.

The determination of the maximum value of the 2D slope angle (see Figure 5) and the maximum amplitude (see Figure 6) was reproducible in six measurement series (M1-M6). Except for outliers in series 2 (M2) for determining the magnitude of the 2D slope angle (Figure 5), all series of measurements showed only larger values at the position of the streak, between 310° and 330°.

Exemplary representations of the measurement series 1 (M1) for the rotational positions 240° and 320° are shown in Figure 4.

The results of all rotational positions are shown in the following Tables 1 to 3 and summarized in Figures 5 and 6.

**Table 1**

| **Messreihe** | **M1** | | | | | | **M2** | | | | | |
|---|---|---|---|---|---|---|---|---|---|---|---|---|
| Rotation [°] | 2D slope angle [arcsec] | | | Amplitude [µm] | | | 2D slope angle [arcsec] | | | Amplitude [µm] | | |
| | P1 | P2 | max | P1 | P2 | max | P1 | P2 | max | P1 | P2 | max |
| 0 | 21 | 158 | **158** | 0.6 | 0.6 | **0.6** | 466 | 475 | **475** | 0.7 | 0.7 | **0.7** |
| 10 | 1530 | 22 | **1530** | 1.6 | 0.7 | **1.6** | 777 | 1792 | **1792** | 0.7 | 2.0 | **2.0** |
| 20 | 517 | 709 | **709** | 0.6 | 1.1 | **1.1** | 472 | 758 | **758** | 0.6 | 1.0 | **1.0** |
| 30 | 220 | 139 | **220** | 0.6 | 0.3 | **0.6** | 67 | 189 | **189** | 0.7 | 0.7 | **0.7** |
| 40 | 284 | 261 | **284** | 0.3 | 0.6 | **0.6** | 492 | 1018 | **1018** | 0.4 | 1.6 | **1.6** |
| 50 | 1047 | 28 | **1047** | 1.2 | 0.4 | **1.2** | 107 | 620 | **620** | 0.8 | 1.0 | **1.0** |
| 60 | 323 | 1193 | **1193** | 0.8 | 1.8 | **1.8** | 281 | 629 | **629** | 0.5 | 1.1 | **1.1** |
| 70 | 945 | 310 | **945** | 1.0 | 0.5 | **1.0** | 338 | 1779 | **1779** | 0.4 | 2.1 | **2.1** |
| 80 | 1235 | 184 | **1235** | 1.6 | 0.4 | **1.6** | 2946 | 987 | **2946** | 3.5 | 1.5 | **3.5** |
| 90 | 613 | 176 | **613** | 0.9 | 0.4 | **0.9** | 711 | 1278 | **1278** | 0.9 | 1.7 | **1.7** |
| 100 | 1846 | 604 | **1846** | 6.9 | 0.9 | **6.9** | 1764 | 1794 | **1794** | 2.4 | 2.3 | **2.4** |
| 110 | 337 | 1705 | **1705** | 0.6 | 2.1 | **2.1** | 0 | 1298 | **1298** | 0.7 | 1.4 | **1.4** |
| 120 | 1164 | 397 | **1164** | 1.3 | 0.8 | **1.3** | 199 | 566 | **566** | 0.2 | 0.7 | **0.7** |
| 130 | 147 | 1116 | **1116** | 0.4 | 1.7 | **1.7** | 1334 | 306 | **1334** | 2.2 | 0.9 | **2.2** |
| 140 | 1481 | 284 | **1481** | 2.1 | 0.5 | **2.1** | 1830 | 1444 | **1830** | 2.1 | 1.8 | **2.1** |
| 150 | 368 | 547 | **547** | 1.2 | 0.8 | **1.2** | 1604 | 189 | **1604** | 2.3 | 0.8 | **2.3** |
| 160 | 4570 | 533 | **4570** | 5.1 | 2.2 | **5.1** | 1048 | 9 | **1048** | 1.4 | 1.1 | **1.4** |
| 170 | 2113 | 321 | **2113** | 2.5 | 2.8 | **2.8** | 649 | 163 | **649** | 1.3 | 1.8 | **1.8** |
| 180 | 1844 | 1008 | **1844** | 2.2 | 1.3 | **2.2** | 11912 | 210 | **11912** | 1.7 | 0.9 | **1.7** |
| 190 | 788 | 711 | **788** | 3.2 | 1.6 | **3.2** | 1181 | 160 | **1181** | 1.4 | 0.6 | **1.4** |
| 200 | 3201 | 910 | **3201** | 3.9 | 2.1 | **3.9** | 2539 | 3125 | **3125** | 3.2 | 4.0 | **4.0** |
| 210 | 734 | 482 | **734** | 0.9 | 0.6 | **0.9** | 24751 | 802 | **24751** | 1.9 | 0.6 | **1.9** |
| 220 | 270 | 634 | **634** | 0.5 | 1.2 | **1.2** | 309 | 156 | **309** | 0.5 | 0.3 | **0.5** |
| 230 | 417 | 171 | **417** | 0.6 | 0.4 | **0.6** | 450 | 684 | **684** | 0.5 | 0.8 | **0.8** |
| 240 | 1022 | 213 | **1022** | 1.2 | 0.8 | **1.2** | 1155 | 316 | **1155** | 1.6 | 0.9 | **1.6** |
| 250 | 991 | 1136 | **1136** | 1.5 | 1.3 | **1.5** | 242 | 482 | **482** | 0.7 | 0.9 | **0.9** |
| 260 | 46 | 356 | **356** | 0.6 | 0.8 | **0.8** | 800 | 800 | **800** | 1.1 | 1.1 | **1.1** |
| 270 | 90 | 507 | **507** | 0.6 | 0.8 | **0.8** | 541 | 4555 | **4555** | 1.3 | 5.8 | **5.8** |
| 280 | 158 | 240 | **240** | 0.4 | 0.5 | **0.5** | 11 | 485 | **485** | 0.3 | 0.6 | **0.6** |
| 290 | 287 | 409 | **409** | 0.9 | 0.5 | **0.9** | 1043 | 825 | **1043** | 1.4 | 1.6 | **1.6** |
| 300 | 468 | 169 | **468** | 0.8 | 0.3 | **0.8** | 770 | 105 | **770** | 0.8 | 0.9 | **0.9** |
| 310 | 913 | 263 | **913** | 1.1 | 0.8 | **1.1** | 21517 | 18750 | **21517** | 27.1 | 25.4 | **27.1** |
| 320 | 24205 | 20180 | **24205** | 29.9 | 26.3 | **29.9** | 2025 | 733 | **2025** | 2.9 | 0.6 | **2.9** |
| 330 | 23846 | 20929 | **23846** | 30.2 | 28.5 | **30.2** | 863 | 89 | **863** | 1.3 | 0.4 | **1.3** |
| 340 | 1186 | 237 | **1186** | 1.4 | 0.5 | **1.4** | 2404 | 85 | **2404** | 3.2 | 0.4 | **3.2** |
| 350 | 2475 | 964 | **2475** | 2.8 | 1.4 | **2.8** | 2425 | 2737 | **2737** | 5.7 | 4.5 | **5.7** |

**Table 2**

| **Messreihe** | **M3** | | | | | | **M4** | | | | | |
|---|---|---|---|---|---|---|---|---|---|---|---|---|
| Rotation [°] | 2D slope angle [arcsec] | | | Amplitude [µm] | | | 2D slope angle [arcsec] | | | Amplitude [µm] | | |
| | P1 | P2 | max | P1 | P2 | max | P1 | P2 | max | P1 | P2 | max |
| 0 | 20 | 126 | **126** | 0.5 | 0.4 | **0.5** | 132 | 252 | **252** | 0.7 | 0.6 | **0.7** |
| 10 | 251 | 1947 | **1947** | 0.4 | 2.4 | **2.4** | 318 | 683 | **683** | 0.5 | 0.9 | **0.9** |
| 20 | 811 | 555 | **811** | 1.0 | 0.7 | **1.0** | 1269 | 157 | **1269** | 1.6 | 0.3 | **1.6** |
| 30 | 79 | 480 | **480** | 0.3 | 1.0 | **1.0** | 2933 | 508 | **2933** | 3.6 | 0.9 | **3.6** |
| 40 | 329 | 646 | **646** | 0.8 | 0.9 | **0.9** | 1051 | 758 | **1051** | 1.4 | 1.0 | **1.4** |
| 50 | 806 | 804 | **806** | 1.0 | 1.2 | **1.2** | 981 | 2281 | **2281** | 1.8 | 2.6 | **2.6** |
| 60 | 240 | 435 | **435** | 0.7 | 1.0 | **1.0** | 101 | 1590 | **1590** | 1.1 | 1.6 | **1.6** |
| 70 | 521 | 634 | **634** | 0.6 | 0.6 | **0.6** | 578 | 381 | **578** | 1.3 | 1.2 | **1.3** |
| 80 | 1779 | 558 | **1779** | 2.3 | 0.7 | **2.3** | 783 | 2802 | **2802** | 1.3 | 3.8 | **3.8** |
| 90 | 521 | 792 | **792** | 0.8 | 1.2 | **1.2** | 1478 | 538 | **1478** | 1.7 | 0.8 | **1.7** |
| 100 | 892 | 172 | **892** | 1.2 | 0.5 | **1.2** | 75 | 341 | **341** | 0.7 | 0.6 | **0.7** |
| 110 | 209 | 805 | **805** | 0.5 | 1.1 | **1.1** | 1513 | 823 | **1513** | 1.8 | 1.1 | **1.8** |
| 120 | 1582 | 1449 | **1582** | 2.2 | 1.7 | **2.2** | 1989 | 541 | **1989** | 2.9 | 0.5 | **2.9** |
| 130 | 47 | 475 | **475** | 0.7 | 1.0 | **1.0** | 1222 | 44 | **1222** | 1.5 | 0.7 | **1.5** |
| 140 | 310 | 949 | **949** | 0.9 | 1.3 | **1.3** | 157 | 2084 | **2084** | 0.3 | 2.4 | **2.4** |
| 150 | 4031 | 2860 | **4031** | 5.0 | 4.3 | **5.0** | 1939 | 782 | **1939** | 2.6 | 1.2 | **2.6** |
| 160 | 2699 | 3184 | **3184** | 4.1 | 3.6 | **4.1** | 1184 | 2091 | **2091** | 1.6 | 2.7 | **2.7** |
| 170 | 3402 | 1506 | **3402** | 4.7 | 2.8 | **4.7** | 1046 | 314 | **1046** | 1.9 | 1.5 | **1.9** |
| 180 | 1223 | 1302 | **1302** | 1.4 | 2.3 | **2.3** | 2155 | 356 | **2155** | 2.5 | 1.3 | **2.5** |
| 190 | 2208 | 1459 | **2208** | 3.3 | 2.0 | **3.3** | 1334 | 32 | **1334** | 1.5 | 1.2 | **1.5** |
| 200 | 1714 | 4175 | **4175** | 1.8 | 5.1 | **5.1** | 340 | 288 | **340** | 0.8 | 0.6 | **0.8** |
| 210 | 750 | 2919 | **2919** | 1.3 | 3.6 | **3.6** | 901 | 1080 | **1080** | 0.8 | 1.1 | **1.1** |
| 220 | 159 | 3349 | **3349** | 0.7 | 4.1 | **4.1** | 2672 | 629 | **2672** | 3.0 | 1.4 | **3.0** |
| 230 | 54 | 174 | **174** | 0.6 | 0.4 | **0.6** | 1228 | 1422 | **1422** | 2.0 | 1.5 | **2.0** |
| 240 | 2130 | 907 | **2130** | 2.5 | 1.3 | **2.5** | 402 | 1145 | **1145** | 0.6 | 1.5 | **1.5** |
| 250 | 588 | 162 | **588** | 1.0 | 0.5 | **1.0** | 793 | 1623 | **1623** | 0.9 | 2.5 | **2.5** |
| 260 | 1009 | 656 | **1009** | 1.4 | 1.0 | **1.4** | 600 | 79 | **600** | 1.1 | 0.6 | **1.1** |
| 270 | 2657 | 290 | **2657** | 3.1 | 1.0 | **3.1** | 277 | 871 | **871** | 0.7 | 1.2 | **1.2** |
| 280 | 623 | 171 | **623** | 0.6 | 0.6 | **0.6** | 143 | 737 | **737** | 0.3 | 1.2 | **1.2** |
| 290 | 217 | 2811 | **2811** | 1.0 | 4.1 | **4.1** | 1154 | 394 | **1154** | 1.4 | 0.9 | **1.4** |
| 300 | 2097 | 1323 | **2097** | 3.1 | 1.5 | **3.1** | 36 | 292 | **292** | 0.8 | 0.6 | **0.8** |
| 310 | 26799 | 25892 | **26799** | 37.5 | 29.9 | **37.5** | 22394 | 18352 | **22394** | 30.9 | 31.8 | **31.8** |
| 320 | 2027 | 411 | **2027** | 2.5 | 0.8 | **2.5** | 214 | 1440 | **1440** | 0.8 | 2.3 | **2.3** |
| 330 | 429 | 212 | **429** | 0.4 | 0.6 | **0.6** | 1615 | 26 | **1615** | 2.3 | 0.4 | **2.3** |
| 340 | 550 | 1889 | **1889** | 0.6 | 2.8 | **2.8** | 301 | 2241 | **2241** | 0.8 | 3.0 | **3.0** |
| 350 | 1012 | 1073 | **1073** | 1.3 | 1.5 | **1.5** | 924 | 1473 | **1473** | 1.4 | 2.0 | **2.0** |

**Table 3**

| **Messreihe** | **M5** | | | | | | **M6** | | | | | |
|---|---|---|---|---|---|---|---|---|---|---|---|---|
| Rotation [°] | 2D slope angle [arcsec] | | | Amplitude [µm] | | | 2D slope angle [arcsec] | | | Amplitude [µm] | | |
| | P1 | P2 | max | P1 | P2 | max | P1 | P2 | max | P1 | P2 | max |
| 0 | 452 | 15 | **452** | 0.7 | 0.3 | **0.7** | 995 | 270 | **995** | 1.4 | 0.7 | **1.4** |
| 10 | 544 | 777 | **777** | 0.8 | 1.0 | **1.0** | 1224 | 365 | **1224** | 1.7 | 0.4 | **1.7** |
| 20 | 822 | 1481 | **1481** | 1.2 | 2.2 | **2.2** | 276 | 173 | **276** | 1.0 | 1.1 | **1.1** |
| 30 | 342 | 1412 | **1412** | 1.2 | 1.8 | **1.8** | 2387 | 1086 | **2387** | 3.1 | 1.3 | **3.1** |
| 40 | 1259 | 1023 | **1259** | 1.7 | 1.8 | **1.8** | 1774 | 395 | **1774** | 2.5 | 0.4 | **2.5** |
| 50 | 370 | 2834 | **2834** | 2.1 | 3.5 | **3.5** | 1109 | 1253 | **1253** | 1.1 | 2.0 | **2.0** |
| 60 | 776 | 1298 | **1298** | 1.4 | 1.4 | **1.4** | 360 | 264 | **360** | 0.7 | 0.5 | **0.7** |
| 70 | 3798 | 2936 | **3798** | 5.3 | 3.2 | **5.3** | 592 | 1259 | **1259** | 1.1 | 1.7 | **1.7** |
| 80 | 178 | 1522 | **1522** | 1.2 | 2.1 | **2.1** | 2206 | 3054 | **3054** | 2.8 | 4.1 | **4.1** |
| 90 | 1171 | 1431 | **1431** | 1.5 | 1.8 | **1.8** | 336 | 617 | **617** | 0.7 | 0.6 | **0.7** |
| 100 | 1093 | 1309 | **1309** | 2.0 | 1.6 | **2.0** | 1316 | 933 | **1316** | 2.2 | 1.9 | **2.2** |
| 110 | 111 | 522 | **522** | 0.6 | 0.7 | **0.7** | 979 | 559 | **979** | 1.2 | 0.7 | **1.2** |
| 120 | 892 | 1947 | **1947** | 1.4 | 3.0 | **3.0** | 1001 | 170 | **1001** | 1.3 | 0.7 | **1.3** |
| 130 | 1968 | 961 | **1968** | 2.4 | 1.4 | **2.4** | 1043 | 834 | **1043** | 1.6 | 1.4 | **1.6** |
| 140 | 2803 | 1186 | **2803** | 3.2 | 1.4 | **3.2** | 609 | 1848 | **1848** | 0.7 | 2.6 | **2.6** |
| 150 | 1669 | 118 | **1669** | 2.3 | 1.0 | **2.3** | 2192 | 92 | **2192** | 2.5 | 0.5 | **2.5** |
| 160 | 695 | 1664 | **1664** | 1.6 | 2.0 | **2.0** | 2280 | 3011 | **3011** | 4.1 | 3.3 | **4.1** |
| 170 | 1416 | 1168 | **1416** | 2.3 | 2.2 | **2.3** | 1591 | 1352 | **1591** | 2.0 | 2.0 | **2.0** |
| 180 | 625 | 787 | **787** | 0.8 | 1.4 | **1.4** | 57 | 2307 | **2307** | 1.1 | 2.8 | **2.8** |
| 190 | 3030 | 2151 | **3030** | 3.8 | 3.0 | **3.8** | 4857 | 1323 | **4857** | 5.9 | 1.8 | **5.9** |
| 200 | 2535 | 1779 | **2535** | 2.1 | 2.1 | **2.1** | 347 | 505 | **505** | 0.8 | 1.6 | **1.6** |
| 210 | 147 | 2844 | **2844** | 1.1 | 3.7 | **3.7** | 223 | 40 | **223** | 0.7 | 0.7 | **0.7** |
| 220 | 1081 | 365 | **1081** | 1.1 | 0.5 | **1.1** | 1126 | 275 | **1126** | 1.2 | 1.0 | **1.2** |
| 230 | 493 | 2436 | **2436** | 0.7 | 3.1 | **3.1** | 2003 | 1777 | **2003** | 2.4 | 2.4 | **2.4** |
| 240 | 639 | 588 | **639** | 0.9 | 0.8 | **0.9** | 1221 | 49 | **1221** | 1.4 | 0.5 | **1.4** |
| 250 | 33 | 1096 | **1096** | 0.5 | 1.4 | **1.4** | 784 | 905 | **905** | 1.0 | 1.3 | **1.3** |
| 260 | 314 | 640 | **640** | 0.8 | 0.8 | **0.8** | 108 | 587 | **587** | 0.5 | 1.0 | **1.0** |
| 270 | 592 | 1123 | **1123** | 1.0 | 1.4 | **1.4** | 291 | 1010 | **1010** | 0.7 | 1.3 | **1.3** |
| 280 | 517 | 354 | **517** | 1.0 | 0.4 | **1.0** | 170 | 174 | **174** | 0.5 | 0.4 | **0.5** |
| 290 | 413 | 3291 | **3291** | 1.2 | 4.5 | **4.5** | 3280 | 944 | **3280** | 4.2 | 1.4 | **4.2** |
| 300 | 739 | 1505 | **1505** | 1.3 | 1.7 | **1.7** | 203 | 913 | **913** | 0.7 | 1.0 | **1.0** |
| 310 | 29526 | 24738 | **29526** | 34.2 | 33.4 | **34.2** | 27157 | 22899 | **27157** | 35.3 | 34.4 | **35.3** |
| 320 | 1788 | 206 | **1788** | 2.2 | 0.3 | **2.2** | 1294 | 1316 | **1316** | 2.0 | 2.3 | **2.3** |
| 330 | 283 | 218 | **283** | 0.3 | 0.6 | **0.6** | 425 | 148 | **425** | 0.7 | 0.4 | **0.7** |
| 340 | 613 | 2179 | **2179** | 0.9 | 2.9 | **2.9** | 310 | 503 | **503** | 0.8 | 1.2 | **1.2** |
| 350 | 430 | 551 | **551** | 0.6 | 1.1 | **1.1** | 10 | 989 | **989** | 0.8 | 1.2 | **1.2** |

### Comparative Examples

A segment of a glass tube having a thickness of 3 mm was tested for streaks using laser interferometry.

### Laser interferometry

In laser interferometry, a planar wavefront propagates through the optical sample and is reflected back at a reference plane. Assuming a constant refractive index, the delay in the signal propagation time is measured and output as a total wavefront error (TWE).

### Equipment used:

- Fizeau laser interferometer Verifire (ZYGO)
- 152.4 mm measuring aperture and 632.8 nm measuring wavelength
- SN 18-23-654193, Test device PE 1-018
- Software Mx (Zygo), version 8.0.0.3

### Measurement and evaluation parameters used:

- Use of maximum zoom (lateral resolution 0.03 mm)
- Noise Tolerant Mode
- Shutter 100%
- Zernike Removal: Piston, Tilt

The sample was positioned such that the front face was facing the interferometer. The notch marked as the start position was aligned at "12 o'clock" or 0°. The specimen was measured. The specimen was then step by step rotated 10° counterclockwise and repeatedly measured again until all positions from "0° position" to "350° position" were measured.

### Data analysis

A line profile (or slice) was laid from left to right through the TWE display. The profile was positioned below the vertex of the tube section, perpendicular to the radius, as shown in Figure 2.

In the two-dimensional representation of the line profile, the profile extremes (peaks and valleys) were marked using the so-called inspectors. The amount of the angle between these two positions of the line profile was evaluated. The evaluation was carried out for a line profile that was 10 mm long and for a line profile that was 2 mm long. The value of the angle was given in the unit arcsec.

Due to the poor signal intensity, the measurements showed areas where no data could be generated and therefore could not be evaluated. This affected peripheral areas, the area of the streak, and individual defects of varying sizes across the entire sample.

Laser interferometry turned out to be a method not suitable for detecting optical inhomogeneities in a sample with high spatial resolution and area coverage.

### Reference numerals

- 11: White light source
- 12: Optical fiber
- 13: Lens system
- 14: Proximal surface
- 15: Distal surface
- 16: Spectrometer
- 20: Glass tube
- 21: Outer surface
- 22: Inner surface
- 23: Vertex
- 24: Radius
- 25: Center line profile

## Claims

1. Method for detecting optical inhomogeneities in a sample, the method comprising the following steps:
a) Providing a sample having an actual thickness profile,
b) Determining the apparent thickness profile of the sample with a chromatic confocal thickness measurement,
c) Detecting optical inhomogeneities based on deviations of the apparent thickness profile from the actual thickness profile.

2. Method according to claim 1, wherein the sample has a transmittance of at least 50% at any wavelength within a range of from 380 to 750 nm.

3. Method according to at least one of the preceding claims, wherein the sample comprises or consists of glass or glass ceramic.

4. Method according to at least one of the preceding claims, wherein the method further comprises the step of visualizing the deviations of the apparent thickness profile from the actual thickness profile, in particular by a false-color representation.

5. Method according to at least one of the preceding claims, wherein step a) of providing a sample having an actual thickness profile comprises a polishing step.

6. Method according to at least one of the preceding claims, wherein step b) of determining the apparent thickness profile of the sample with a chromatic confocal thickness measurement comprises a stepwise scanning of the sample, in particular with a step size in a range of from 0.1 µm to 1000 µm in x- and/or y-direction.

7. Method according to claim 6, wherein the scanning step is done in a meandering way.

8. Method according to at least one of the preceding claims, wherein the total thickness variation (TTV) of the sample is at most 10 µm.

9. Method according to at least one of the preceding claims, wherein the method further comprises generating one or more 2D line profiles, in particular by plotting the apparent sample thickness along a trajectory of measuring positions.

10. Method according to claim 9, wherein the trajectory is a straight line.

11. Method according to at least one of claims 9 and 10, wherein the optical inhomogeneities are detected based on one or more 2D line profiles, in particular based on the amplitude and/or steepness of changes in apparent thickness along the 2D line profiles.

12. Method according to claim 11, wherein the amplitude of a change in apparent thickness is determined as the difference between the highest apparent thickness and the lowest apparent thickness within a distance of interest along the 2D line profile.

13. Method according to at least one of claims 11 and 12, wherein the steepness of a change in apparent thickness is determined as the ratio of the difference between the highest apparent thickness and the lowest apparent thickness within a distance of interest along the 2D line profile and the respective distance of interest.

14. Apparatus adapted for carrying out the method of at least one of the preceding claims.

15. Use of the method according to at least one of claims 1 to 13 in quality control.
